# FASCICULE DE BREVET EUROPEEN

(11) **EP 0 431 699 B1**
(45) Date de publication et mention de la délivrance du brevet: **03.05.1995**
(21) Numéro de dépôt: 90203187.1
(22) Date de dépôt: 03.12.1990
(51) Int. Cl.: H04N 7/32, H04N 11/04

(54) **Procédé et dispositif de décodage d'images animées**
Verfahren und Einrichtung zur Bewegtbilddecodierung
Method and arrangement for moving picture decoding

(30) Priorité: 08.12.1989 FR 8916253
(43) Date de publication de la demande: 12.06.1991
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Fautier, Thierry, F-75008 Paris (FR)
(74) Mandataire: Caron, Jean

(56) Documents cités:
- US-A- 4 843 466
- IEEE TRANSACTIONS ON COMMUNICATIONS. vol. 26, no. 10, octobre 1978, NEW YORK US pages 1413 - 1419; K. KINUHATA ET AL.: "DIGITAL STANDARDS CONVERTER BY ADAPTIVE INTRA-FRAME LINE INTERPOLATION"
- IEEE JOURNAL ON SELECTED AREAS IN COMMUNICATION. vol. 6, no. 3, avril 1988, NEW YORK US pages 513 - 519; H. HARASAKI ET AL.: "A SINGLE-BOARD VIDEO SIGNAL PROCESSOR MODULE EMPLOYING NEWLY DEVELOPED LSI DEVICES"

## Description

La présente invention concerne un procédé de décodage d'images animées, faisant usage d'un décodeur pour décoder des données numériques concernant des images, données qui sont codées sous une forme comprimée, associé à un processeur pour créer des images à partir des données décodées qui sont des informations de luminance et de chrominance, avec une mémoire pour mémoriser lesdites informations, procédé dans lequel la création de certaines images se fait avec interpolation à partir de pixels d'une image précédente et d'une image subséquente, pixels dont la position dans l'image précédente ou subséquente peut à priori être quelconque.

Un tel procédé s'applique notamment dans des systèmes de transmission d'images pour lesquels un débit modéré est particulièrement recherché, par exemple : système de visualisation d'images animées enregistrées sur disque compact ou magnétophone numérique dit "Digital Audio Tape", canal à 1Mb/s, vidéotéléphone.

Pour le codage, on réalise par exemple des fonctions algorithmiques connues dans le domaine de la compression d'images : codage en cosinus discret, quantification adaptative, codage à longueur variable.

En outre, on peut aussi par exemple ne transmettre l'information de mouvement qu'une trame sur deux, les autres étant reconstruites par compensation de mouvement symétrique par rapport aux trames (N-1) et (N+1).

Le décodage ayant été réalisé de façon connue, il est alors suivi de la reconstruction d'une trame sur deux par interpolation (connue sous le nom de "frame skip") avec compensation de mouvement symétrique.

Un tel décodage en temps réel d'images animées fortement comprimées requiert à la fois une grande puissance de traitement et un vaste espace mémoire destiné à stocker une ou plusieurs images. La taille de la mémoire est relativement importante, et on ne peut pas la réaliser en un seul circuit intégré avec la partie opérative du décodeur. Il se pose alors des problèmes d'accès à cette mémoire externe, le rythme d'échanges nécessitant un débit très important. Ce problème prend toute son acuité avec les décodeurs mettant en oeuvre des algorithmes de codage inter-image et de reconstruction par interpolation d'images. En effet il faut, pour générer un point d'une image accéder à des points dans d'autres images, et donc conserver en mémoire plusieurs images complètes. Du fait de la compensation de mouvement, on travaille habituellement par blocs carrés ou rectangulaires et non par lignes, et les blocs à traiter dans deux images différentes peuvent être éloignés l'un de l'autre d'une distance égale à l'amplitude du mouvement à compenser. C'est pourquoi la position des pixels considérés dans l'image précédente ou subséquente peut à priori être quelconque. Il faut noter aussi que pour le décodage proprement dit, il est également nécessaire d'accéder à des pixels décodés d'une autre image, puisque les données codées peuvent être des données de différence entre deux images.

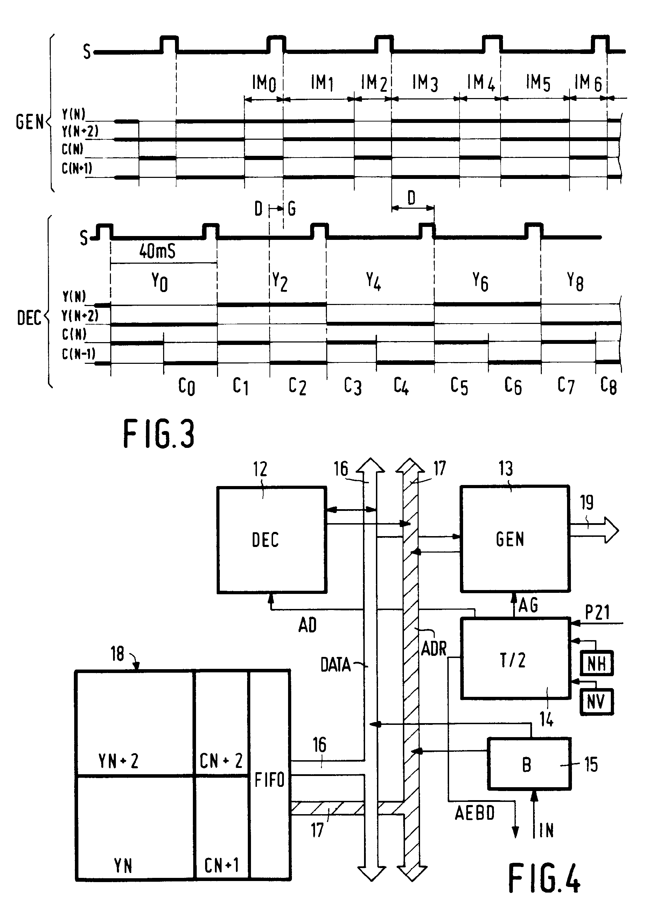

Un dispositif de décodage réalisant ce type d'opérations est décrit dans un article de "IEEE journal on selected areas in communications", vol 6, n° 3, avril 1988, pages 513, 519. Ce dispositif fait usage d'une pluralité de processeurs en parallèle et d'au moins quatre mémoires (MEM1 à MEM4, figure 3).

On désire utiliser de tels décodeurs dans une gamme de produits grand public où le faible coût et le nombre limité de boîtiers sont primordiaux. Une partie significative du coût d'un tel décodeur est représentée par la mémoire. L'invention se propose donc de fournir un circuit qui puisse fonctionner avec un nombre limité de boitiers de mémoire.

L'invention est basée sur l'idée qu'en acceptant de renoncer à accéder à toutes les positions d'une image précédente lors de l'interpolation (ce qui signifie, dans le cas de la compensation de mouvement : limiter la longueur maximale autorisée pour un vecteur mouvement), et à condition de synchroniser l'interpolation par rapport au décodage, on peut commencer plus tôt à remplir une mémoire d'image avec une nouvelle image, et de ce fait on peut économiser une mémoire.

Ainsi, le procédé selon l'invention est remarquable en ce que ladite interpolation, qui engendre des pixels d'une image, débute avant la fin du décodage des données de l'image subséquente.

Grâce à cela, on peut économiser la capacité de mémoire d'une trame complète.

Certes, l'article de P. Frencken "Two integrated progressive scan converters" dans la revue "I.E.E.E transactions on consumer electronics" d'août 1986 présente en figure 8 un processus dans lequel la compression des données de la trame B pour générer la trame B' commence avant la fin de cette même trame B. Toutefois le problème technique résolu selon ce document est totalement différent de celui résolu ici, et les moyens employés sont également différents : d'une part dans le document en question on utilise pour les comparer trois pixels verticalement adjacents et non des pixels de position quelconque, et d'autre part il n'est pas question de décodage et il n'est donc pas question de rapport temporel entre le décodage et l'interpolation.

En pratique, ladite interpolation débute avantageusement après le décodage de la moitié des données de l'image subséquente. Les informations d'une image de rang N peuvent donc commencer à être remplacées dans la mémoire par celles de l'image de rang N+4 dès que la moitié de la génération de l'image de rang N+1 a été réalisée.

Il est avantageux de prévoir un retard fixe entre le commencement de la génération d'une image et le commencement du décodage des données numériques d'une autre image. En pratique, ceci signifie qu'on commence à compter un temps avec le début de la génération d'une image interpolée, et on autorise le décodage d'une nouvelle image après un temps fixe.

Afin d'économiser encore de la capacité mémoire, il est en outre avantageux de commencer la présentation d'une image avant que la génération de cette image ne soit terminée.

Le dispositif de décodage d'images animées est remarquable en ce que sa mémoire d'image est organisée en :
- deux parties contenant respectivement deux trames en luminance espacées temporellement de 80ms,
- deux autres parties contenant respectivement deux trames en chrominance espacées temporellement de 40 mS, dans le cas où l'on applique l'invention seulement aux données de luminance, ou bien espacées temporellement de 80 mS, dans le cas où l'on applique l'invention aussi aux données de chrominance.
- et une partie servant de tampon de régulation, organisée en FIFO, et contenant les codes d'un couple d'images comprimées.

La description qui va suivre, en regard des dessins annexés décrivant des exemples non limitatifs fera bien comprendre comment l'invention peut être réalisée.

La figure 1 est un schéma d'un système incorporant un décodeur dans lequel l'invention peut être mise en oeuvre.

La figure 2 illustre le découpage fonctionnel du décodage.

La figure 3 est un diagramme pour expliquer les temps d'accès aux différentes images contenues en mémoire.

La figure 4 est un schéma d'un décodeur et d'une mémoire pour la mise en oeuvre du procédé de l'invention.

Les figures 5 et 6 sont des diagrammes de temps montrant la synchronisation entre le décodage et la génération des images.

Dans le présent exemple, on utilise une base de données stockée sur disque compact, données qui sont enregistrées sous forme numérique et représentent des informations de types divers :
- programme à exécuter par le microprocesseur du système
- données alphanumériques
- graphiques affichables sur un écran de type télévision
- images naturelles fixes
- séquences d'images naturelles animées
- son ou parole

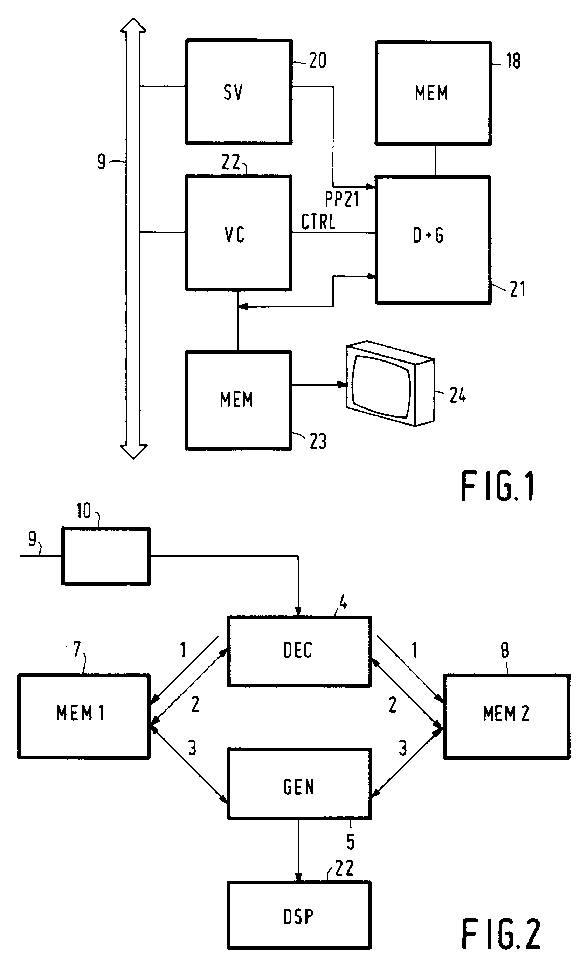

Le système d'exploitation de cette base de données consiste en un lecteur de disque compact numérique auquel relié à un système de traitement de l'information représenté sur la figure 1 organisé autour d'un microprocesseur et de son bus associé. Un circuit spécialisé 22 (Video Controleur) se charge de l'interface avec le dispositif d'affichage 24 de type écran de télévision. Ce circuit 22 commande la lecture d'une mémoire d'affichage 23 qui contient les images à afficher et assure ainsi la lecture des pixels de manière à les délivrer à l'écran au rythme du balayage de télévision. Le système est muni en outre d'un décodeur 21 dans lequel est mise en oeuvre la présente invention et dont le rôle est de décoder les informations des images animées dans la mémoire d'affichage 23 à une cadence suffisante pour permettre au circuit 22 de les lire et de les visualiser.

Le codage est fait selon un algorithme qui code des images successives notées IM(N), IM(N+1), IM(N+2)... de façon séquentielle, à un rythmes de 25Hz. Une image IM(N) est composée d'une trame en luminance notée Y(N) et d'une trame en chrominance notée C(N) représentant les composantes de différence de couleur notées U(N) et V(N).

La chrominance de toutes les trames est codée et la luminance d'une trame sur deux est codée, celle des trames paires par exemple. Pour ces codages, on réalise des fonctions algorithmiques connues dans le domaine de la compression d'images : codage en cosinus discret (DCT = Discret Cosinus Transform) avec compensation de mouvement par rapport à la trame précédente, quantification adaptative, codage à longueur variable (VLC = Variable Length Coding). On ne transmet que l'information de mouvement des trames impaires en luminance Y(N) qui sont reconstruites au décodage par compensation de mouvement symétrique par rapport aux trames Y(N-1) et Y(N+1).

L'algorithme de décodage nécessite au minimum deux mémoires de trame en luminance et deux mémoires de trame en chrominance. En effet pour décoder une trame codée, on doit disposer de la trame précédente et pour reconstruire les trames interpolées en luminance Y(N) on doit disposer en mémoire des informations dans Y(N-1) et Y(N+1) nécessaires à la compensation de mouvement symétrique.

L'algorithme complet réalisé par le décodeur 21 peut être séparé en un processus de décodage proprement dit (DEC) et un processus de génération d'images (GEN). Le décodage proprement dit consiste en un décodage de codes à longueur variable, suivi d'une quantification inverse puis d'une transformation en cosinus discret avec compensation de mouvement, toutes ces opérations étant connues de l'homme du métier. La génération d'images est constituée par :
- l'interpolation de la trame manquante en luminance à partir de l'information de déplacement
- le rééchantillonage de la chrominance
- le formatage des images au format YUV ou DYUV

Sur la figure 2, l'algorithme est schématisé par ses opérations essentielles. Les codes à décoder sont présentés sur le bus système 9. Le module 10 réalise la fonction de régularisation de la fourniture des codes, lesquels arrivent à longueur variable sur le bus 9 . Les codes sont ensuite traités dans le module 4 qui réalise le décodage proprement dit, c'est-à-dire quantification inverse, et DCT inverse. Les données décodées sont reprises par le module 5 qui réalise la génération d'images.

Deux mémoires 7 et 8 notées aussi MEM1 et MEM2 sont utilisées à tour de rôle d'une manière symbolisée par les flèches 1, 2, 3 : La flèche 1 symbolise l'écriture d'un bloc décodé, la flèche 2 symbolise la lecture d'un bloc compensé en mouvement dans la trame précédente, et la flèche 3 symbolise la lecture d'un bloc décodé avec ou sans compensation de mouvement.

Une image affichable est enfin fournie au module 22 (qui réalise l'interface avec l'affichage) par le module de génération d'image 5, à l'aide des mémoires 7 et 8.

Sur la figure 3 est indiqué de quelle façon les différents accès mémoire sont imbriqués, au cours du temps. Un groupe de tracés référencé DEC se rapporte aux accès mémoire correspondant au décodage proprement dit et un groupe de tracés référencé GEN se rapporte aux accès mémoire correspondant à la génération d'image proprement dite. Dans chacun de ces groupes, un signal noté S comporte des impulsions de synchronisation (front descendant actif), et des lignes notées Y(N), Y(N+2), C(N), C(N+1) indiquent par des segments dessinés en gras les périodes où ont lieu les transferts mémoire concernant respectivement la luminance d'une image de rang N (paire), la luminance de l'image de rang N+2 (soit donc la luminance de l'image transmise après celle de rang N ), la chrominance d'une image de rang N, et la chrominance de l'image de rang N+1 (soit donc la chrominance de l'image suivante). Le dessin respecte la concordance temporelle des signaux entre les groupes DEC et GEN, et chaque ligne Y ou C correspond à une position physique différente en mémoire.

La partie DEC est facile à comprendre : les informations de chrominance d'une image sont traitées deux fois plus vite que les informations de luminance de cette même image, du fait du sous-échantillonnage spatial de la chrominance et du sous-échantillonnage temporel de la luminance. On traite donc deux images en chrominance pendant qu'on traite une image en luminance. Les données de chrominance des images de rang N et N-1 sont traitées en même temps que les données de luminance de l'image de rang N. Par exemple les données de chrominance C₂ et C₁ sont traitées en même temps que les données de luminance Y₂, les données de chrominance C₄ et C₃ sont traitées en même temps que les données de luminance Y₄, etc. Les données Y₄ remplacent en mémoire les données Y₀, les données C₂ remplacent les données C₀ et de même chaque fois que des données sont représentées sur la même ligne que d'autres.

Sur la partie GEN sont indiquées des périodes IM₀ à IM₆ dont les indices représentent à chaque fois le rang de l'image en cours de génération, par rapport au rang N (par exemple IM₁ se rapporte à une image de rang N+1, IM2 à une image de rang N+2, etc). Lors de la génération de la luminance pour l'image IM₀ (de rang N), qui se fait sans interpolation, les transferts mémoire concernent la luminance et la chrominance de l'image de rang N, ce qui est indiqué par un trait gras sur les lignes Y(N) et C(N). Lors de la génération de la luminance pour l'image IM₁ (de rang N+1), qui se fait par interpolation entre les images N et N+2, les transferts mémoire concernent ces deux images, ce qui est indiqué par un trait gras sur les lignes Y(N) et Y(N+2). Il est à remarquer que la génération d'une image impaire (interpolée en luminance) se fait en deux fois plus de temps que pour une image paire car il faut lire deux trames de luminance pour en générer une. En ce qui concerne la chrominance, comme il n'y a pas d'interpolation, la génération de l'image IM₁ se fait en accédant à la chrominance de rang N+1, ce qui est indiqué par un trait gras sur la ligne C(N+1), et ainsi de suite.

La génération de la trame impaire IM₁ par interpolation débute, au moment illustré par une ligne verticale G, avant la fin du décodage des données de luminance de la trame subséquente Y₂ (dans le groupe DEC), et plus exactement après le décodage de la moitié de ces données, illustré par la ligne verticale D. En outre les données de luminance d'une trame de rang N sont remplacées dans la mémoire par celles de la trame de rang N+4 dès que la moitié de la génération de la luminance de la trame de rang N+1 a été réalisée, par exemple Y₈ commence à remplacer Y₄ avant la fin de IM₅, plus précisémment lorsque la moitié de IM₅ a été réalisée. Ces deux conditions aux limites donnent la valeur à donner au retard fixe entre le processus de génération et celui de décodage. Ce retard fixe est illustré par D entre le commencement de la génération d'une image IM₃ et le commencement du décodage Y₆,C₅ d'un autre image. Bien entendu, comme la durée de chaque processus est fixée, cala revient au même de dire qu'il y a un retard de Y₆ vis-à-vis de IM₈ ou un retard de IM₄ ou IM₅ vis-à-vis de Y₆.

La génération d'une image non interpolée (paire) débute après la fin du décodage des données de luminance et de chrominance de cette trame, et la génération d'une image interpolée débute après la fin du décodage des données de chrominance de cette trame. Par exemple la génération de IM₂ débute après la fin du décodage des données de luminance Y₂ et de chrominance C₂ et la génération d'une image interpolée IM₁débute après la fin du décodage C₁.

La génération d'images est donc synchrone avec le décodage des images, ce qui permet d'utiliser les buffers d'images nécessaires à la génération des images à la fois en lecture et en écriture. On économise ainsi la mémorisation d'une trame en luminance et d'une trame en chrominance. Comme l'interpolation de la trame de luminance relative à la génération de l'image impaire s'effectue "à la volée" il n'est pas nécessaire de mémoriser cette trame, d'où un gain mémoire d'une image complète.

Grâce à l'organisation particulière décrite ci-dessus du séquencement de décodage et de la génération des images, on peut se contenter d'une capacité mémoire du décodeur correspondant à deux images, l'image générée étant directement envoyée dans la mémoire d'affichage. Cette réduction de capacité mémoire permet la réalisation avec un petit nombre de boitiers. Une conséquence de ce fait est que la largeur du bus de données se réduit : le bus a en effet une largeur au plus égale au nombre de boîtiers multiplié par le nombres de bits accessibles en parallèle sur un boîtier. Ceci conditionne le débit maximum entre le décodeur et sa mémoire.

L'algorithme de décodage étant différentiel, Y(N+2) est décodé à partir de Y(N), et C(N+2) est décodé à partir de C(N+1), l'organisation de la mémoire en deux buffers de luminance et deux buffers de chrominance permet de réaliser un décodage (VLC inverse, quantification inverse, DCT inverse avec compensation de mouvement) selon la séquence indiquée sur la figure 3.

Concernant la luminance, la reconstruction de la trame Y(N) par compensation de mouvement symétrique implique que les déplacements verticaux ne dépassent pas la moitié de la dimension verticale de l'image en 40ms. On notera que les déplacements verticaux critiques ne dépassent guère 32 pixels par 40ms, autrement dit la limite algorithmique ne sera jamais atteinte avec les formats d'images standards (par exemple : 256 x 352 pixels).

Les mémoires les moins chères sont des mémoires dynamiques. L'inconvénient de telles mémoires est leur long temps d'accès en mode aléatoire, dû au multiplexage des adresses en deux champs (rangée et colonne). Pour pallier cet inconvénient, les traitements sont organisés de telle façon que les accès à la mémoire se font en majorité par salves de mots d'adresses consécutives appartenant à une même rangée (mode"page").
A l'intérieur du circuit sont ajoutées des mémoires tampons permettant de constituer ces salves. Ce mode de travail permet d'accéder à la mémoire dynamique en mode page, dans lequel on ne spécifie pour chaque mot que l'adresse colonne, et qui permet un débit considérable, typiquement supérieur à celui des mémoires statiques de taille équivalente. L'ensemble des transferts nécessaires peut être alors conduit avec un bus de données acheminant un seul pixel à la fois, compatible avec la faible largeur de bus mentionnée plus haut. La conjugaison de ces mesures (accès en salves et réduction du nombre d'images intermédiaires) aboutit à une solution particulièrement économique.

Le schéma bloc du décodeur et de sa mémoire associée pour la mise en oeuvre du procédé est représenté sur la figure 4. Un automate 14 reçoit en début de séquence d'images à décoder, de la part d'un superviseur non représenté, des informations lui donnant le nombre NH de blocs de l'image en horizontal et le nombre NV de blocs de l'image en vertical. A partir de ces paramètres il compte tous les T/2 unités de temps (la valeur de T sera explicitée plus loin) et génère des signaux de validation AG et AD des modules de génération 13 et de décodage 12 respectivement, ainsi qu'un signal AEBD d'autorisation d'écriture de code dans la mémoire tampon de régulation 15, d'une capacité de quelques kilo-octets.

Les données transitent entre la mémoire tampon 15, les modules de génération 13 et de décodage 12 et une mémoire 18 au moyen d'un bus de données 16, avec l'aide d'un bus d'adresse 17.

Le système est bâti autour d'une seule mémoire 18 contenant l'équivalent de deux images intermédiaires et dans laquelle le décodeur lit et écrit les valeurs des pixels appartenant à ces images. Cette mémoire contient :
- deux trames en luminance espacées temporellement de 80ms, soit Y_{N} et Y_{N+2}
- deux trames en chrominance espacées temporellement de 40ms, soit C_{N+1} et C_{N+2}
- la mémoire tampon de régulation organisée en FIFO et contenant le code d'un couple d'images comprimées.

Le décodeur doit pouvoir fournir au dispositif d'affichage un couple d'images en moins de 80ms. Cependant si ce'dispositif désire afficher des images à un rythme inférieur à 25 images par secondes, le décodeur peut stopper la génération d'images et par conséquent le décodage sur ordre du superviseur.

Le superviseur envoie à l'automate 14 un signal de début de génération d'un couple d'images P2I (Prêt pour 2 Images). Ce signal passe à l'état haut avec une périodicité supérieure ou égale à 80ms. A partir de ce signal le décodeur génère en interne des signaux nommés:
- AGP (Attente de Génération d'Image Paire)
- AGI (Attente de Génération d'Image Impaire)
- AD (Attente de Décodage)
- AEBD (Attente d'Ecriture de la mémoire tampon Décodeur)

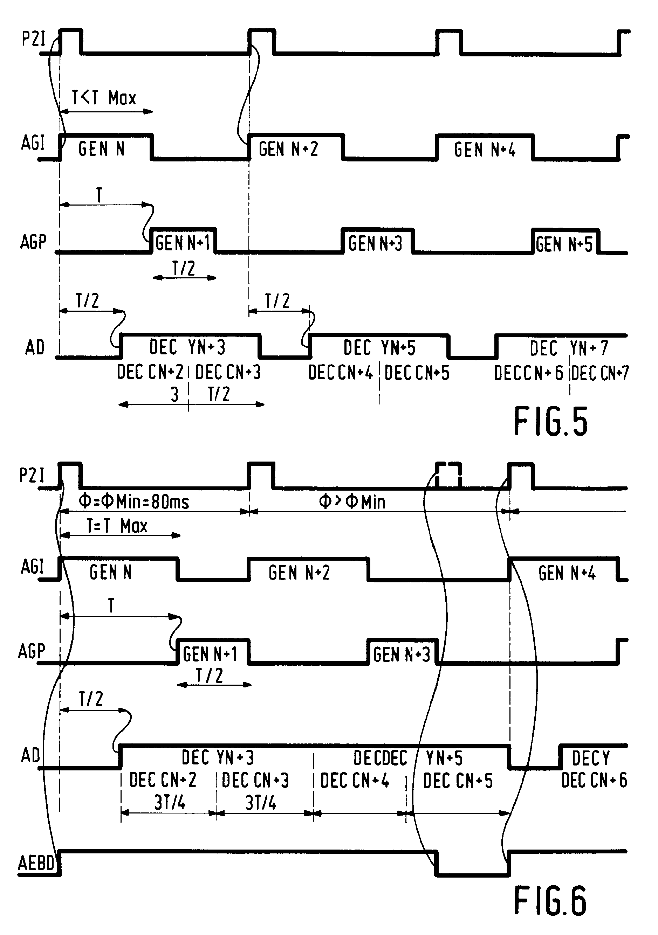

Les signaux P2I, AGI, AGP, AD, et AEBD sont illustrés par les figures 5 et 6 qui montrent la synchronisation des processus de décodage et de génération d'images. Les figures utilisent les références (GEN, Y_{N}, etc) déja employées plus haut. Le temps de base pour la génération d'une image paire est indiqué par T. La figure 5 concerne le cas où on décode des images de taille maximale à une fréquence d'affichage inférieure à 25Hz. La figure 6 concerne le cas où la taille des images est inférieure à la taille maximum autorisée. Dans ce cas le processus est terminé à un instant indiqué par le front descendant du signal AEBD et il y a alors un temps d'attente avant le début du processus suivant.

Le système décrit ci-dessus impose que les processus GEN et DEC soient réalisés en un temps fixe, et la mémoire 18 qui est reliée à un seul bus doit être partagée entre ces deux processus. Ceci pose un problème qui peut être résolu en attribuant des fenêtres temporelles de longueur fixe à chacun des processus GEN et DEC pour accéder à la mémoire. La taille et la fréquence de répétition de ces fenêtres doivent être déterminées en fonction du nombre d'accès mémoire à effectuer pendant le temps imparti à chaque processus, comme indiqué par la figure 6, et de la largeur du bus de communication entre le décodeur 18 et sa mémoire 21 (figure 4).

On appelera performance du système de décodage la puissance de calcul du décodeur (nombre maximum de blocs pouvant être décodés par unité de temps) et la bande passante des unités dialoguant avec le décodeur (nombre d'échanges par unité de temps). La performance du système de décodage doit assurer que T+T/2 (voir figures 5 et 6) soit inférieur à 80ms, pour assurer la génération ainsi que le décodage d'un couple d'images en moins de 80ms. Il est à remarquer que les performances du système de décodage doivent être calculées pour la taille d'image maximale. Si le format d'images est réduit, le décodage se fera comme indiqué sur la figure 6.

L'automate autorise l'écriture dans la mémoire de régulation s'il reçoit le signal P2I toutes les 80ms. Il compte en interne pendant 80ms après l'arrivée de chaque signal P2I. Si au bout de 80ms il ne reçoit pas un nouveau signal P2I il interdit toute nouvelle écriture dans la mémoire de régulation jusqu'à l'arrivée du nouveau signal P2I. Un tel système évite tout débordement de la mémoire de régulation.

Dans le procédé et le dispositif décrits ci-dessus on a utilisé un processus d'interpolation seulement pour la luminance, mais il est évident que le procédé s'étend aussi au cas où l'on préfère ne transmettre qu'une trame sur deux également en chrominance et donc recréer une trame de chrominance sur deux par interpolation. Dans ce cas l'homme du métier saura aisément apporter les modifications nécessaires, puisqu'il s'agit simplement d'appliquer à la chrominance ce qui a été expliqué ci-dessus pour la luminance, et notamment : sur la figure 3, il faut remplacer les lignes C(N) et C(N+1) ou C(N-1) par des lignes C(N) et C(N+2) avec des périodes actives aux mêmes moments que pour les lignes Y(N) et Y(N+2), et sur la figure 4 il faut remplacer l'indication CN+1 dans la mémoire 18 par l'indication CN.

## Revendications

1. Procédé de décodage d'images animées, faisant usage d'un décodeur pour décoder des données numériques concernant des images, données qui sont codées sous une forme comprimée, associé à un processeur pour créer des images à partir des données décodées qui sont des informations de luminance et de chrominance, avec une mémoire pour mémoriser lesdites informations, procédé dans lequel la création d'images se fait avec interpolation à partir de pixels d'une image précédente et d'une image subséquente, pixels dont la position dans l'image précédente ou subséquente peut être différente de celle du pixel à créer, caractérisé en ce que l'interpolation qui engendre des pixels d'une image débute avant la fin du décodage des données de l'image subséquente.

2. Procédé selon la revendication 1, caractérisé en ce que ladite interpolation débute après le décodage de la moitié des données de l'image subséquente.

3. Procédé selon l'une quelconque des revendications précédentes, caractérisé en ce que les informations d'une image de rang N commencent à être remplacées dans la mémoire par celles de l'image de rang N+4 dès que la moitié de la génération de l'image de rang N+1 a été réalisée.

4. Procédé selon l'une quelconque des revendications précédentes, caractérisé en ce qu'on prévoit un retard fixe entre le commencement de la génération d'une image et le commencement du décodage de données numériques d'une autre image.

5. Procédé selon la revendication 4, caractérisé en ce qu'on commence à compter un temps avec le début de la génération d'une image interpolée, et on autorise le décodage d'une nouvelle image après un temps fixe.

6. Procédé selon l'une quelconque des revendications précédentes, caractérisé en ce qu'on commence la présentation d'une image avant que la génération de cette image ne soit terminée.

7. Dispositif de décodage d'images animées, comprenant un décodeur pour décoder des données numériques concernant les images, données qui sont codées sous une forme comprimée, associé à un processeur pour créer des images à partir des données décodées qui sont des informations de luminance et de chrominance, et une mémoire pour mémoriser lesdites informations, la création d'images se faisant avec interpolation à partir de pixels d'une image précédente et d'une image subséquente, pixels dont la position dans l'image précédente ou subséquente peut être différente de celle du pixel à créer, caractérisé en ce que ladite mémoire est organisée en :
- deux parties contenant respectivement deux trames en luminance espacées temporellement de 80ms,
- deux autres parties contenant respectivement deux trames en chrominance espacées temporellement de 40ms,
- et une partie servant de tampon de régulation, organisée en FIFO, et contenant les codes d'un couple d'images comprimées.

8. Dispositif de décodage d'images animées, comprenant un décodeur pour décoder des données numériques concernant les images, données qui sont codées sous une forme comprimée, associé à un processeur pour créer des images à partir des données décodées qui sont des informations de luminance et de chrominance, et une mémoire pour mémoriser lesdites informations, la création d'images se faisant avec interpolation à partir de pixels d'une image précédente et d'une image subséquente, pixels dont la position dans l'image précédente ou subséquente peut être différente de celle du pixel à créer, caractérisé en ce que ladite mémoire est organisée en :
- deux parties contenant respectivement deux trames en luminance espacées temporellement de 80ms,
- deux autres parties contenant respectivement deux trames en chrominance espacées temporellement de 80 mS,
- et une partie servant de tampon de régulation, organisée en FIFO, et contenant les codes d'un couple d'images comprimées.

## Patentansprüche

1. Verfahren zur Bewegtbilddecodierung, bei dem ein Decoder zur Decodierung bildbezogener, in komprimierter Form codierter digitaler Daten verwendet wird, in Verbindung mit einem Prozessor zur Erzeugung von Bildern aus decodierten Daten, die Farbart- und Helligkeitsinformationen darstellen, mit einem Speicher zur Speicherung der genannten Informationen, wobei bei dem Verfahren die Erzeugung bestimmter Bilder durch Interpolation von Pixeln eines vorangegangenen und eines nachfolgenden Bildes erfolgt, wobei die Position der Pixel auf im vorangegangenen oder nachfolgenden Bild grundsätzlich beliebig sein kann, dadurch gekennzeichnet, daß die genannte Interpolation, die die Pixel eines Bildes erzeugt, vor dem Ende der Decodierung der Daten des nachfolgenden Bildes beginnt.

2. Verfahren nach Anspruch 1, dadurch gekennzeichnet, daß die genannte Interpolation nach der Decodierung der Hälfte der Daten des nachfolgenden Bildes beginnt.

3. Verfahren nach Anspruch 2, dadurch gekennzeichnet, daß mit dem Ersetzen der Informationen eines Bildes mit der Rangstufe N durch jene des Bildes mit der Rangstufe N+4 im Speicher begonnen wird, sobald die Erzeugung des Bildes mit der Rangstufe N+ 1 zur Hälfte durchgeführt worden ist.

4. Verfahren nach einem der vorstehenden Ansprüche, dadurch gekennzeichnet, daß zwischen dem Beginn der Erzeugung eines Bildes und dem Beginn der Decodierung der digitalen Daten eines anderen Bildes eine festgelegte Verzögerung vorgesehen ist.

5. Verfahren nach Anspruch 4, dadurch gekennzeichnet, daß beim Beginn der Erzeugung eines interpolierten Bildes eine Zeitzählung einsetzt und die Decodierung eines neuen Bildes nach einer festgelegten Zeit autorisiert wird.

6. Verfahren nach einem der vorstehenden Ansprüche, dadurch gekennzeichnet, daß mit der Wiedergabe eines Bildes begonnen wird, bevor die Erzeugung dieses Bildes beendet ist.

7. Vorrichtung zur Bewegtbilddecodierung mit einem Decoder zur Decodierung in komprimierter Form codierter, die Bilder betreffender digitaler Daten, in Verbindung mit einem Prozessor zur Erzeugung von Bildern aus decodierten Daten, die Helligkeits- und Farbartinformationen darstellen, und einem Speicher zur Speicherung der genannten Informationen, wobei die Erzeugung der Bilder durch Interpolation von Pixeln eines vorangegangenen und eines nachfolgenden Bildes erfolgt, wobei die Position der Pixel im vorangegangenen oder nachfolgenden Bild unterschiedlich von der des zu erzeugenden Pixels sein kann, dadurch gekennzeichnet, daß der genannte Speicher organisiert ist in:
- zwei Teile, die jeweils zwei Helligkeits-Teilbilder enthalten, die einen zeitlichen Abstand von 80 ms zueinander haben,
- zwei andere Teile, die jeweils zwei Farbart-Teilbilder enhalten, die einen zeitlichen Abstand von 40 ms zueinander haben
- und einen Teil, der als Steuerpuffer dient, entsprechend dem FIFO-Prinzip organisiert ist, und die Codes eines Paares komprimierter Bilder enthält.

8. Vorrichtung zur Bewegtbilddecodierung mit einem Decoder zur Decodierung in komprimierter Form komprimierter, die Bilder betreffender digitaler Daten, in Verbindung mit einem Prozessor zur Erzeugung von Bildern aus decodierten Daten, die Helligkeits- und Farbartinformationen darstellen, und einem Speicher zur Speicherung der genannten Informationen, wobei die Erzeugung der Bilder durch Interpolation von Pixeln eines vorangegangenen und eines nachfolgenden Bildes erfolgt, wobei die Position der Pixel im vorangegangenen oder nachfolgenden Bild unterschiedlich von der des zu erzeugenden Pixels sein kann, dadurch gekennzeichnet, daß der genannte Speicher organisiert ist in:
- zwei Teile, die jeweils zwei Helligkeits-Teilbilder enthalten, die einen zeitlichen Abstand von 80 ms zueinander haben,
- zwei andere Teile, die jeweils zwei Farbart-Teilbilder enhalten, die einen zeitlichen Abstand von 80 ms zueinander haben
- und einen Teil, der als Steuerpuffer dient, entsprechend dem FIFO-Prinzip organisiert ist, und die Codes eines Paares komprimierter Bilder enthält.

## Claims

1. A method of decoding animated images, making use of a decoder for decoding digital data relating to the images, which data are encoded in a compressed form, associated with a processor for creating images from the decoded data which are luminance and chrominance information components, and a memory for memorising said information components, in which method the images are created by interpolating pixels of a preceding image and a subsequent image, while the position of the pixels in the preceding or subsequent image may be different from that of the pixel to be created, characterized in that the interpolation generating the pixels of an image starts before the end of decoding the data of the subsequent image.

2. A method as claimed in Claim 1, characterized in that said interpolation starts after half the number of data of the subsequent image has been decoded.

3. A method as claimed in any one of the preceding Claims, characterized in that the replacement of the information components of an image of the row N by those of the image of the row N+4 starts in the memory as soon as half the image of the row N+1 has been generated.

4. A method as claimed in any one of the preceding Claims, characterized in that there is a fixed delay between the start of generating one image and the start of decoding the digital data of another image.

5. A method as claimed in Claim 4, characterized in that the count of a period is started with the start of generating an interpolated image and in that the decoding of a new image is authorized after a fixed period.

6. A method as claimed in any one of the preceding Claims, characterized in that the presentation of an image is started before the generation of said image is ended.

7. A device for decoding animated images, comprising a decoder for decoding digital data relating to the images, which data are encoded in a compressed form, associated with a processor for creating images from the decoded data which are luminance and chrominance information components, and a memory for memorising said information components, the images being created by interpolating pixels of a preceding image and a subsequent image, while the position of the pixels in the preceding or subsequent image may be different from that of the pixel to be created, characterized in that said memory comprises
- two sections comprising two luminance fields, respectively, which are temporally spaced by 80 ms,
- two further sections comprising two chrominance fields, respectively, which are temporally spaced by 40 ms,
- and one section used as a control buffer and arranged as a FIFO comprising the codes of a couple of compressed images.

8. A device for decoding animated images, comprising a decoder for decoding digital data relating to the images, which data are encoded in a compressed form, asssociated with a processor for creating images from the decoded data which are luminance and chrominance information components, and a memory for memorising said information components, the images being created by interpolating pixels of a preceding image and a subsequent image, while the position of the pixels in the preceding or subsequent image may be different from that of the pixel to be created, characterized in that said memory comprises
- two sections comprising two luminance fields, respectively, which are temporally spaced by 80 ms,
- two further sections comprising two chrominance fields, respectively, which are temporally spaced by 80 ms,
- and one section used as a control buffer and arranged as a FIFO comprising the codes of a couple of compressed images.
